# EUROPEAN PATENT APPLICATION

(11) **EP 0 831 392 A1**
(43) Date of publication of application: **25.03.1998**
(21) Application number: 97307322.4
(22) Date of filing: 19.09.1997
(51) Int. Cl.: G06F 3/12, G06K 15/12

(54) **A printer and printing method for rasterized data**

(30) Priority: 19.09.1996 KR 9640892
(71) Applicant: Samsung Electronics Co., Ltd., Suwon-City, Kyungki-do 441-742 (KR)
(72) Inventor: Kim, Duk-Soo, Yongin, Kyonggi-do (KR)
(74) Representative: Tunstall, Christopher Stephen

(57) **Abstract**

A laser printer and printing method are described for obtaining high quality of picture by using different DPIs between a printer engine and data for printing. The resolution of rasterized data received from a host computer is compared with the resolution of the printer engine. The data is transmitting to the printer engine on the first of the two successive horizontal synchronization clock signals and at the same time stored in a line buffer memory. If the data and the printer engine have different resolutions, the data stored in the line buffer memory is transmitted to the printer engine on the second of the two successive horizontal synchronisation clock signals.

## Description

### BACKGROUND OF THE INVENTION

The present invention relates to a printer, for example a laser printer, and to a printing method using a graphic descriptive interpretation (GDI).

In a GDI method, after a personal computer (PC) performs a rasterizing operation of data for printing and transmits the rasterized data to a printer, a printer engine performs printing according to the rasterized data. Compared with the conventional method which requires many memory devices, a high efficiency processor, font storing memory and video controlling device including a data decoding program, etc. the GDI method performs the printing operation by processing the printing data in a PC and transmitting the data to the video controlling device which only plays the role of a buffer.

Rasterized image processing is one method which forms a picture in a graphic mode. First, an image is regarded as a collection of small dots and the image is formed by shading and colouring each dot. In this method, as everything is displayed on the screen by means of dots, the resolution is determined according to the size and number of the dots.

When printing data using the GDI method, if rasterized data having a resolution of 300 DPI (Dots Per Inch) in the personal computer is transmitted to the printer engine, the quality of printing is not so good, as the printer engine prints data having 600 DPI if the printer engine has a resolution above 600 DPI. That is, only half the are is printed in the horizontal direction (scanning direction) and also only half the area is printed in the vertical direction (paper driving direction). As a result, only one quarter (¼) of the area is printed.

To solve this problem, printing in the horizontal direction is performed by reducing the video frequency for printing to one half (½) and printing in the vertical direction is done by performing the printing operation every other line. Accordingly, the full printing area can be restored.

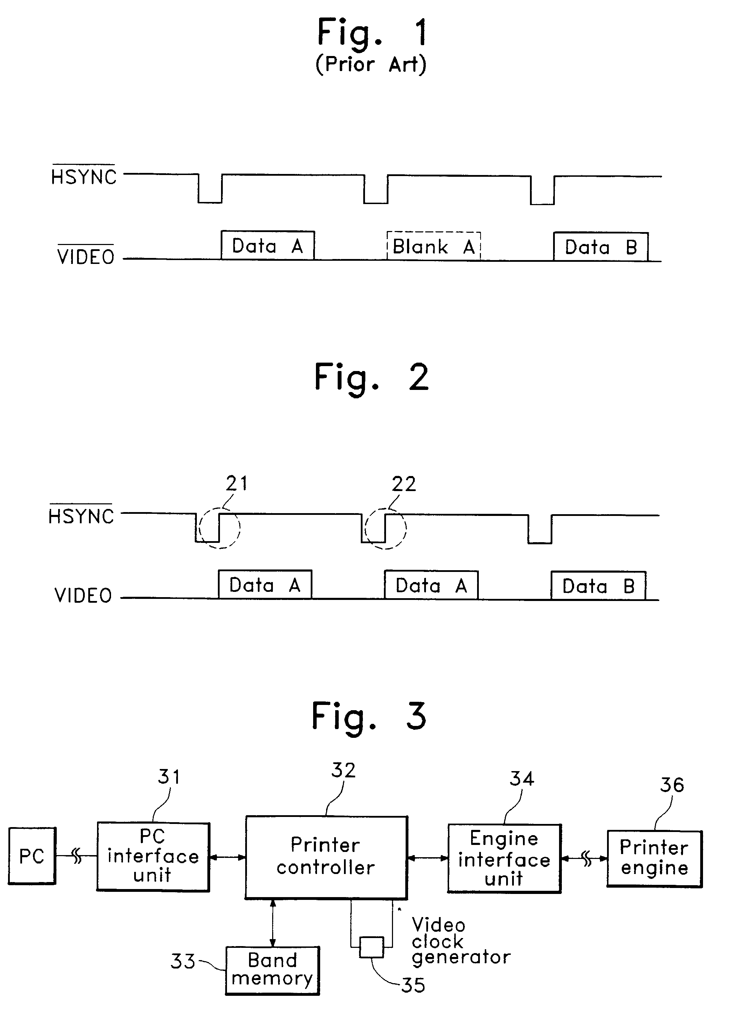

Fig. 1 is a timing chart showing a conventional transmitting method of rasterized data. As shown in the drawing, /HSYNC indicates a horizontal synchronization signal and /VIDEO indicates the period for transmitting data to a printer engine in accordance with the horizontal synchronization signal /HSYNC. Data A and B indicate data of one line which are transmitted to the printer engine according to the /VIDEO signal and a "blank A" means that data are not transmitted when the horizontal synchronization signal /HSYNC is at a second edge to solve the reduction of the printing area caused by the difference of resolution between the data for printing and the printer engine. However, in the conventional printer, as every other line is treated as white (blank A of Fig. 1), the quality of picture deteriorates because of its lower density. Moreover, blank areas cannot be expressed exactly.

### SUMMARY OF THE INVENTION

Therefore, it is an object of the present invention to provide a printer and printing method for obtaining high quality of picture by using different DPIs between a printer engine and data for printing.

Accordingly, the present invention provides a printer comprising:
means for comparing the resolution of rasterized data received from a host computer with the resolution of the printer engine; and
means for transmitting the data to the printer engine once if the data and the printer engine have the same resolution and twice if the data and the printer engine have different resolutions.

The printer may comprise a first memory for storing the data received and in which the means for transmitting the data to the printer engine comprises main control means for reading and transmitting the data stored in the first memory. The printer may comprise clock generating means for generating a video clock for synchronizing the transmission of data to the printer engine.

The means for transmitting the data to the printer engine is preferably adapted to transmit the same data to the printer engine on two successive horizontal synchronisation clock signals if the data and the printer engine have different resolutions. For example, the printer may further comprise a second memory and the means for transmitting the data to the printer engine may be adapted to store temporarily in the second memory the data transmitted to the printer engine on the first of the two successive horizontal synchronization clock signals and to transmit to the printer engine the data stored in the second memory on the second of the two successive horizontal synchronisation clock signals if the data and the printer engine have different resolutions.

The present invention also provides a method of printing rasterized data received from a host computer in a printer comprising:
comparing the resolution of the data received with the resolution of the printer engine; and
transmitting the data to the printer engine once if the data and the printer engine have the same resolution and twice if the data and the printer engine have different resolutions.

The data received may be stored in a first memory before transmission to the printer engine. The same data is preferably transmitted to the printer engine on two successive horizontal synchronisation clock signals if the data and the printer engine have different resolutions. For example, the data transmitted to the printer engine on the first of the two successive horizontal synchronization clock signals may be temporarily stored in a second memory and the data stored in the second memory is transmitted to the printer engine on the second of the two successive horizontal synchronisation clock signals if the data and the printer engine have different resolutions.

### BRIEF DESCRIPTION OF THE DRAWINGS

The present invention will now be described by way of example with reference to the accompanying drawings in which:
Fig. 1 is a timing chart showing a conventional transmitting method of rasterized data;
Fig. 2 is a timing chart showing a transmitting method of rasterized data according to the present invention;
Fig. 3 is a block diagram showing a laser printer for printing rasterized image data according to the present invention;
Fig. 4 is a block diagram showing a controller of the printer;
Fig. 5 is a flowchart showing a process of receiving data from a PC; and
Fig. 6 is a flowchart showing a process of transmitting data to a printer engine.

### DETAILED DESCRIPTION OF THE PREFERRED EMBODIMENTS

Fig. 2 is a timing chart showing a transmitting method of rasterized data according to the present invention. As shown in the drawing, /HSYNC indicates a horizontal synchronization signal and /VIDEO indicates the period for transmitting data to a printer engine in accordance with the horizontal synchronization signal /HSYNC. Data A and B indicate data of one line transmitted to the printer engine according to the /VIDEO signal. To solve the problem of reduction of the printing area caused by the difference of resolution between the data for printing and the printer engine, data A is to show the re-transmission of data which is transmitted at the time of a first rising edge 21 instead of the conventional transmitting method in which the horizontal synchronization signal /HSYNC does not transmit data at the time of a second rising edge 22.

Referring to Fig. 3, there is shown a processing apparatus for rasterized image for printing according to the present invention. As shown in the drawing, the processing apparatus includes a PC interface unit 31 which exchanges information between the PC and a printer controller 32. A printer controller 32 ensures smooth operation by transmitting the information of the PC to the printer engine 36 and transmitting the information of the printer engine 36 to the PC and controls each component and the flow of the rasterized data. A band memory 33 stores the rasterized data of the PC for compensating the difference between inputting speed of the rasterized data of the PC and transmitting speed of the printer engine. An engine interface unit 34 exchanges information with the printer engine 36. A video clock generator 35 controls the transmission of the video data in accordance with the video data processing speed of the printer engine 36.

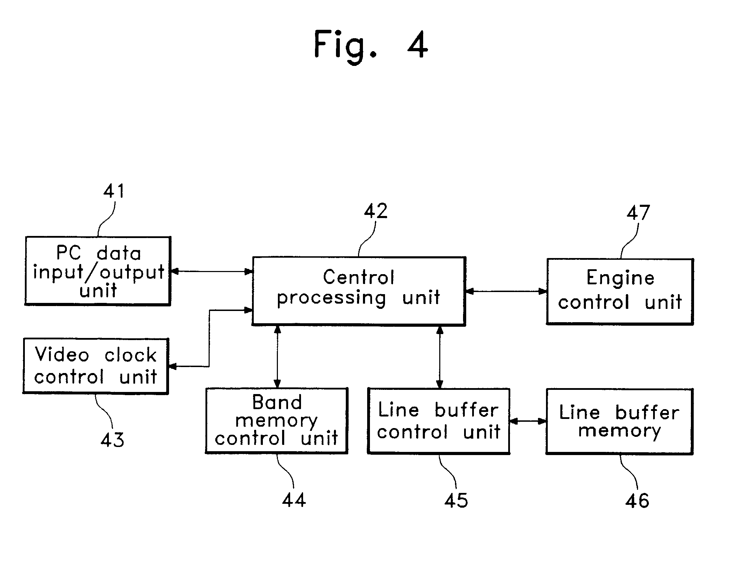

Fig. 4 is a block diagram showing the printer controller. As shown in the drawing, the printer controller includes a PC data input/output unit 41 which divides the kinds of information received from a PC, inputs the control command, status information, and rasterized data to a central processing unit 42 through a predetermined converting process, and transmits the output of the central processing unit 42 to the PC after a predetermined converting process. A central processing unit 42 allows each part to perform smoothly without conflict by controlling the flow of information, managing the operating state of each part and controlling the flow of the rasterized data. A video clock control unit 43 controls the received video clock and provides the clock after converting it into a frequency clock suitable for each part.

A band memory control unit 44 stores or reads the read/registration signal received from the central processing unit 42 in a band memory 33, and transmits a control signal in accordance with the time required by the band memory 33; a line buffer control unit 45 which stores or reads the read/registration signal received from the central processing unit 42 in a line buffer memory 46 and transmits the control signal in accordance with the time required by a line buffer memory 46. A line buffer memory 46 stores all or some of one line of the rasterized data transmitted from the engine control unit 47 and transmits the stored data to the printer engine. An engine control unit 47 divides the kinds of information received from the PC, transmits a control command to the printer engine in the case of control command, transmits a status confirmation result in the case of the status confirmation, and forms and transmits video data suitable to a predetermined video clock received from the video clock control unit 23 in accordance with each synchronization signal received from the printer engine in the case of the rasterized data.

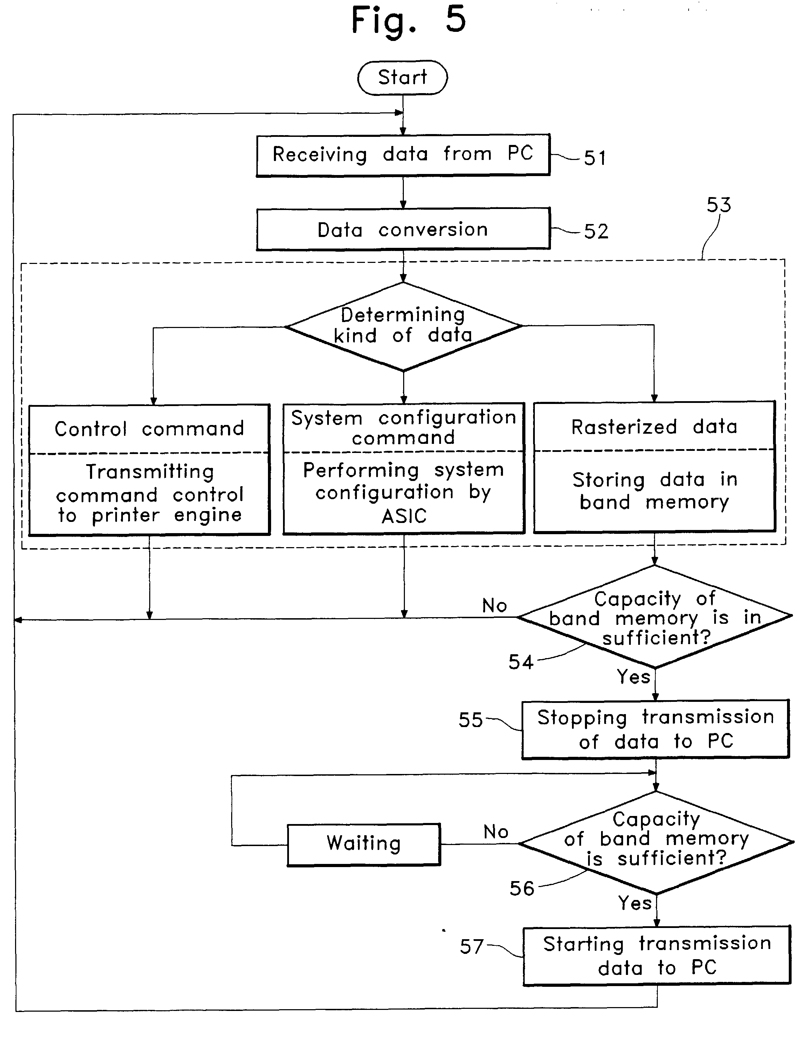

Fig. 5 is a flowchart showing a process of receiving data from the PC. As shown in the drawing, the process includes receiving rasterized data from the PC; converting the received data in accordance with the printer system; storing the data in the band memory 33; determining whether the capacity of the band memory 33 of Fig. 3 is sufficient; temporarily stopping the transmission of the rasterized data to the PC in accordance with the result of the determination; determining the status of the band memory 33; and indicating the operation of re-transmission of the data to the PC in accordance with the result of the determination.

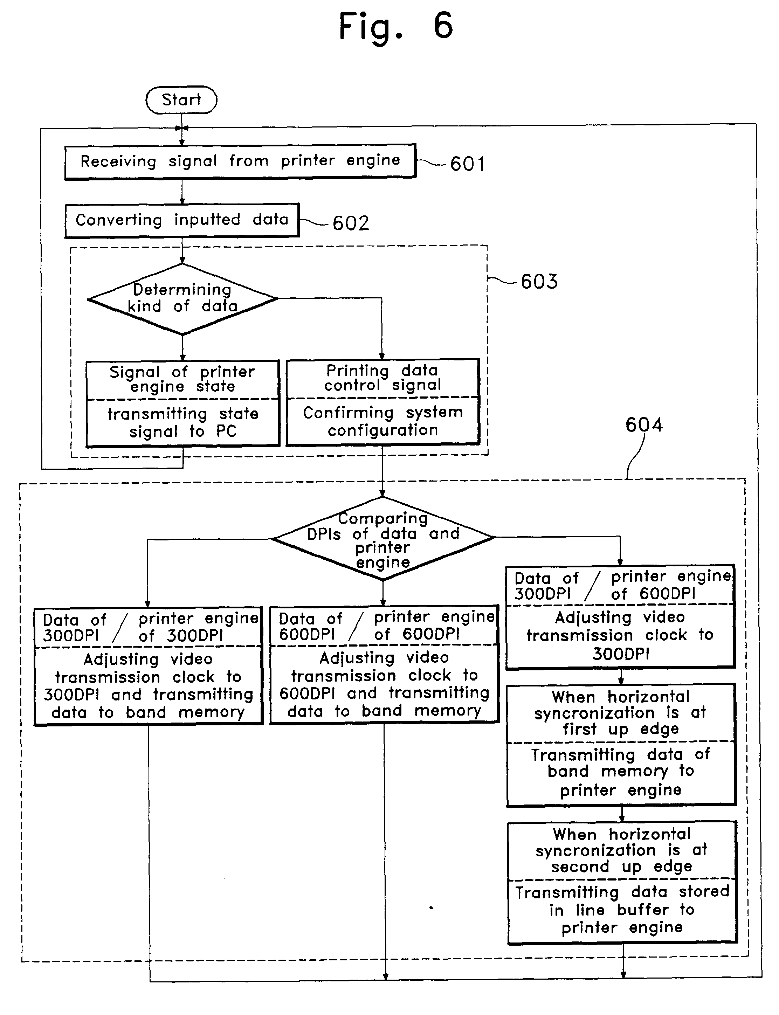

Fig. 6 is a flowchart showing a process of transmitting data to a printer engine from a band memory according to the present invention. As shown in the drawing, the process includes receiving each signal from the printer engine and converting the signals into data; reading the data from the band memory 33; determining the DPI of the rasterized data stored in the band memory 33 and that of the printer engine; transmitting the data to the printer engine 36 if the DPIs are the same as a result of the determination; transmitting the data when a horizontal synchronization signal is at a first rising edge 21 and storing the data in the line buffer memory 46 if the DPIs are not the same; and reading the data stored temporarily in the line buffer memory 46 and transmitting the data to the printer engine 36 when the horizontal synchronization signal is at a second rising edge 22.

The printer which performs a printing operation of rasterized image having high quality of picture according to the present invention, operates a process of receiving the rasterized data from the PC and a process of transmitting the rasterized data to the engine control unit.

First, the process of receiving the rasterized data from the PC and storing the data in the band memory is as follows. A step 51 is performed for receiving the rasterized data from the PC. After receiving the data, a step 52 is performed for converting the data into a predetermined form which the printer provides. After that, it is determined whether the data is a control command, a system configuration command, or rasterized data. As a result of the determination, when the data is a control command, the control command is transmitted to the printer engine control unit 47. When the data is a system configuration command as a result of the determination, the system configuration is performed by an ASIC (Application-Specific IC) inside of the printer.

If the data is found to be rasterized data as a result of the determination, the data is stored in the band memory 33. (Step 53) After storing the data, a step 54 is performed to determine whether the capacity of the band memory 33 is sufficient. As a result of that determination, when the capacity of the band memory 33 is sufficient, a step 51 for receiving the data from the PC is performed again. On the contrary, when the capacity of the band memory 44 is insufficient, a step 55 is performed to stop temporarily the transmission of data from the PC. After stopping the data transmission from the PC, the data from the band memory is continuously output to the printer engine 36. A step 56 is performed to determine that the capacity of the band memory 33 is sufficient to store the data transmitted from the PC. When the capacity of the band memory is sufficient, a step 57 for indicating the re-transmission of data to the PC is performed. After that, step 51 is performed again to receive data from the PC.

The process for transmitting the rasterized data to the engine control unit is as follows. First, a step 601 is performed to receive a signal from the printer engine 36. A step 602 is performed to convert the received signal by the engine control unit 47. After that, it is determined whether the received data is a signal relating to the printer engine state or a printing data control signal. As a result of the determination, when the data is a signal of the printer engine state, the status signal is transmitted to the PC. On the contrary, when the data is a printing data control signal as a result of the determination, a step 603 is performed to confirm the system configuration which confirms the DPI of the present printer system for transmitting the rasterized data to the printer engine 36.

After confirming the DPI of the system, the DPI of the data to be transmitted and that of the printer engine are compared. If the data has 300 DPI and the printer engine has 300 DPI, the data of the band memory 33 is transmitted after the video transmission clock is adjusted to 300 DPI. When the data has 600 DPI and the printer engine has 600 DPI, the data of the band memory 33 is transmitted after the video transmission clock is adjusted to 600 DPI. If the data has 300 DPI and the printer engine has 600 DPI, after the video transmission clock is adjusted to a 300 DPI, the data (data A of Fig. 2) is transmitted to the printer engine 36 when the horizontal synchronization signal /SYNC is at a first rising edge 21. At the same time, the data transmitted from the band memory 33 are successively stored in line buffer memory 46 according to the control of the line buffer control unit 45. After storing the data (data A of Fig. 2) successively in the line buffer memory 46, when a second horizontal synchronization signal /SYNC is at a second rising edge 22, the data (data A of Fig. 2) stored in the line buffer memory 46 according to a control of the line buffer control unit 45 are successively read and they are converted into video data through the engine control unit 47. The video data are transmitted to the printer engine 36 through the engine interface unit 34. (Step 604)

After transmitting data of one line, step 601 is performed to receive signal from the printer engine 36.

As described above, as the problem caused by the difference of DPI between data and the printer engine is solved, the quality of picture can be assured as though it were printed by a laser printer using the same DPI.

## Claims

1. A printer comprising:
means for comparing the resolution of rasterized data received from a host computer with the resolution of the printer engine; and
means for transmitting the data to the printer engine once if the data and the printer engine have the same resolution and twice if the data and the printer engine have different resolutions.

2. A printer according to claim 1 comprising a first memory for storing the data received and in which the means for transmitting the data to the printer engine comprises main control means for reading and transmitting the data stored in the first memory.

3. A printer according to claim 1 or claim 2 comprising clock generating means for generating a video clock for synchronizing the transmission of data to the printer engine.

4. A printer according to any preceding claim in which the means for transmitting the data to the printer engine is adapted to transmit the same data to the printer engine on two successive horizontal synchronisation clock signals if the data and the printer engine have different resolutions.

5. A printer according to claim 4 further comprising a second memory and in which the means for transmitting the data to the printer engine is adapted to store temporarily in the second memory the data transmitted to the printer engine on the first of the two successive horizontal synchronization clock signals and to transmit to the printer engine the data stored in the second memory on the second of the two successive horizontal synchronisation clock signals if the data and the printer engine have different resolutions.

6. A method of printing rasterized data received from a host computer in a printer comprising:
comparing the resolution of the data received with the resolution of the printer engine; and
transmitting the data to the printer engine once if the data and the printer engine have the same resolution and twice if the data and the printer engine have different resolutions.

7. A method of printing rasterized data according to claim 6 in which the data received is stored in a first memory before transmission to the printer engine.

8. A method of printing rasterized data according to claim 6 or claim 7 in which the same data is transmitted to the printer engine on two successive horizontal synchronisation clock signals if the data and the printer engine have different resolutions.

9. A method of printing rasterized data according to claim 8 in which the data transmitted to the printer engine on the first of the two successive horizontal synchronization clock signals is temporarily stored in a second memory and the data stored in the second memory is transmitted to the printer engine on the second of the two successive horizontal synchronisation clock signals if the data and the printer engine have different resolutions.

10. A laser printer as described with reference to and as illustrated in FIGs. 2 et seq. of the accompanying drawings.

11. A method of printing rasterized data received from a host computer in a laser printer as described with reference to and as illustrated in FIGs. 2 et seq. of the accompanying drawings.
